# FASCICULE DE BREVET EUROPEEN

(11) **EP 3 056 393 B1**
(45) Date de publication et mention de la délivrance du brevet: **14.08.2019**
(21) Numéro de dépôt: 16154465.5
(22) Date de dépôt: 05.02.2016
(51) Int. Cl.: B60R 22/26, B60N 2/68

(54) **DISPOSITIF STRUCTUREL D'ARMATURE DE BANQUETTE DE VÉHICULE À ENTRETOISE D'ANCRAGE D'ÉLÉMENTS DE CEINTURES DE SÉCURITÉ**
STRUKTURELLE EINLAGENVORRICHTUNG FÜR BANK EINES FAHRZEUGS MIT VERANKERUNGSRAHMEN FÜR DIE SICHERHEITSGURTELEMENTE
STRUCTURAL FRAMEWORK DEVICE OF A VEHICLE SEAT WITH STRUT FOR ANCHORING SAFETY BELT ELEMENTS

(30) Priorité: 13.02.2015 FR 1551209
(43) Date de publication de la demande: 17.08.2016
(73) Titulaire: PSA Automobiles SA, 78300 Poissy (FR)
(72) Inventeur: BERTIN, FREDERIC, 78340 LES CLAYES SOUS BOIS (FR); GEORGE, VINCENT, 28700 BEVILLE LE COMTE (FR); CAUSSIN, EMILIO, 75015 PARIS (FR)

(56) Documents cités:
- EP-A1- 0 749 867
- EP-A1- 2 210 773
- EP-A2- 1 245 464
- FR-A1- 3 005 015

## Description

L'invention concerne les sièges de type banquette qui équipent certains véhicules, éventuellement de type automobile, et plus précisément les armatures qui font partie de tels sièges.

Dans certains véhicules, notamment de type automobile, certains sièges de type banquette comprennent une armature, comportant au moins deux dispositifs structurels comprenant chacun un flasque principal et un flasque de renfort solidarisés l'un à l'autre, et à laquelle sont solidarisés des éléments d'au moins deux ceintures de sécurité de type trois points.

On entend ici par « élément » un brin de boucle (comprenant un lien auquel est solidarisée fixement une boucle (de verrouillage) destinée à accueillir un pêne coulissant d'une sangle) ou une pièce d'ancrage (à laquelle est couplée la sangle, également couplée à un enrouleur automatique) ou encore un enrouleur automatique.

Le document EP2210773 divulgue un châssis de siège de véhicule à haute résistance fabriqué sans augmentation du poids. Le châssis de siège supporte une assise de siège et un dossier de siège, un dispositif d' inclinaison permet de pivoter le dossier de siège par rapport à l'assise de siège et ajuster l'angle de pivotement du dossier de siège, et une pièce d'ancrage pour ceinture de sécurité monté sur le châssis de dossier de siège supportant une extrémité de la ceinture de sécurité. Un châssis central arrière du châssis de dossier de siège possède des sections périphériques extérieures ayant une forme de colonne rectangulaire creuse et une plaque de renfort fixée sur les sections périphériques extérieures, installée parallèlement à la direction d'une charge exercée par la ceinture de sécurité sur le dispositif d'ancrage. La partie inférieure de chaque dispositif structurel sert fréquemment de point d'ancrage pour une pièce d'ancrage (ou ferrure) via une première vis présentant un premier diamètre et/ou au moins un brin de boucle via une seconde vis présentant un second diamètre supérieur au premier diamètre.

L'enrouleur automatique est solidarisé soit à l'armature, soit au plancher du véhicule en étant associé à un élément de renvoi de sangle solidarisé à une structure placée derrière le siège. Dans la première alternative, on peut avantageusement solidariser un unique brin de boucle de l'une des deux ceintures de sécurité et une pièce d'ancrage de l'autre ceinture de sécurité dans deux zones différentes du dispositif structurel intermédiaire qui est intercalé entre les deux dispositifs structurels d'extrémité. Mais cela ne permet pas de respecter certains critères de chocs imposés par certaines réglementations en vigueur. Dans la seconde alternative, l'élément de renvoi de sangle de chaque ceinture de sécurité n'est pas solidarisé fixement à l'armature et donc on est contraint de solidariser les deux brins de boucle des deux ceintures de sécurité dans une même zone du dispositif structurel intermédiaire via une même seconde vis. Cela s'avère contraignant du fait de l'espace très réduit dont on dispose et surtout cela ne permet pas d'utiliser un dispositif structurel intermédiaire identique à l'un des deux dispositifs structurels d'extrémité, ce qui augmente les coûts et complexifie la gestion des stocks.

L'invention a donc notamment pour but d'améliorer la situation.

Elle propose notamment à cet effet un dispositif structurel, destiné à faire partie d'une armature d'un siège de type banquette, et comprenant :
- un flasque principal comportant une partie inférieure munie d'un premier trou,
- un flasque de renfort muni d'un second trou et solidarisé à la partie inférieure du flasque principal, et
- une entretoise comprenant une première extrémité traversant le premier ou second trou et munie d'un premier filetage interne, présentant un premier diamètre et propre à coopérer avec une tige filetée d'une première vis adaptée à l'ancrage d'une pièce d'ancrage d'une ceinture de sécurité, et une seconde extrémité traversant le second ou premier trou et munie d'un second filetage interne, présentant un second diamètre supérieur au premier diamètre et propre à coopérer avec une tige filetée d'une seconde vis adaptée à l'ancrage d'au moins un brin de boucle d'une ceinture de sécurité.

Grâce à cette entretoise disposant de filetages internes de diamètres différents, un même dispositif structurel peut désormais recevoir une pièce d'ancrage et/ou au moins un brin de boucle, et donc peut être aussi bien placé à un niveau intermédiaire d'une armature qu'à une extrémité d'une armature.

Le dispositif structurel selon l'invention peut comporter d'autres caractéristiques qui peuvent être prises séparément ou en combinaison, et notamment :
- la première extrémité de l'entretoise peut être solidarisée fixement soit au flasque principal, soit au flasque de renfort ;
- la première extrémité de l'entretoise peut comprendre un premier épaulement définissant une face d'appui sensiblement plaquée contre une face interne soit du flasque principal, soit du flasque de renfort ;
- la seconde extrémité de l'entretoise peut être solidarisée fixement soit au flasque de renfort, soit au flasque principal ;
- la seconde extrémité de l'entretoise peut comprendre un second épaulement définissant une face d'appui sensiblement plaquée contre une face interne soit du flasque de renfort, soit du flasque principal.

L'invention propose également une armature, destinée à faire partie d'un siège de type banquette, et comprenant :
- trois dispositifs structurels du type de celui présenté ci-avant, un premier (intermédiaire) étant intercalé entre des deuxième et troisième (d'extrémité),
- deux pièces d'ancrage de deux ceintures de sécurité solidarisées respectivement aux deuxième et troisième dispositifs structurels via deux premières vis, et
- deux brins de boucle de ces deux ceintures de sécurité solidarisés au premier dispositif structurel via une seconde vis.

L'invention propose également un siège de type banquette et comprenant une armature du type de celle présentée ci-avant.

L'invention propose également un véhicule, éventuellement de type automobile et éventuellement de type utilitaire ou transport en commun, et comprenant au moins un siège de type banquette du type de celui présenté ci-avant.

D'autres caractéristiques et avantages de l'invention apparaîtront à l'examen de la description détaillée ci-après, et des dessins annexés (obtenus en CAO/DAO, d'où le caractère apparemment discontinu de certaines lignes et la présence de parties grisées), sur lesquels :
- la figure 1 illustre schématiquement, dans une vue en perspective, un exemple d'armature destinée à faire partie d'un siège de type banquette et comportant trois dispositifs structurels selon l'invention couplés pour deux d'entre eux à des éléments de ceintures de sécurité,
- la figure 2 illustre schématiquement, dans une vue de face, une partie inférieure de l'armature de la figure 1, et
- la figure 3 illustre schématiquement, dans une vue en perspective, les trois éléments principaux constituant les deux dispositifs structurels de la figure 2.

L'invention a notamment pour but de proposer un dispositif structurel 1ⱼ destiné à faire partie d'une armature 2 d'un siège de type banquette d'un véhicule.

On considère dans ce qui suit, à titre d'exemple non limitatif, que le véhicule est de type automobile et utilitaire. Il s'agit par exemple d'un fourgon, éventuellement de type dit K1 ou K2. Mais l'invention n'est pas limitée à ce type de véhicule. Elle concerne en effet tout type de véhicule comportant au moins un siège de type banquette disposant d'une armature et couplé à au moins deux ceintures de sécurité de type trois points. Par conséquent, l'invention concerne les véhicules terrestres, les véhicules maritimes (ou fluviaux) et les aéronefs.

Par ailleurs, on considère dans ce qui suit, à titre d'exemple non limitatif, que le siège est une banquette pouvant accueillir deux personnes. Mais l'invention n'est pas limitée à ce type de banquette. Elle concerne en effet tout type de banquette pouvant accueillir, en position assise, au moins deux personnes, dans n'importe quel rang d'un véhicule.

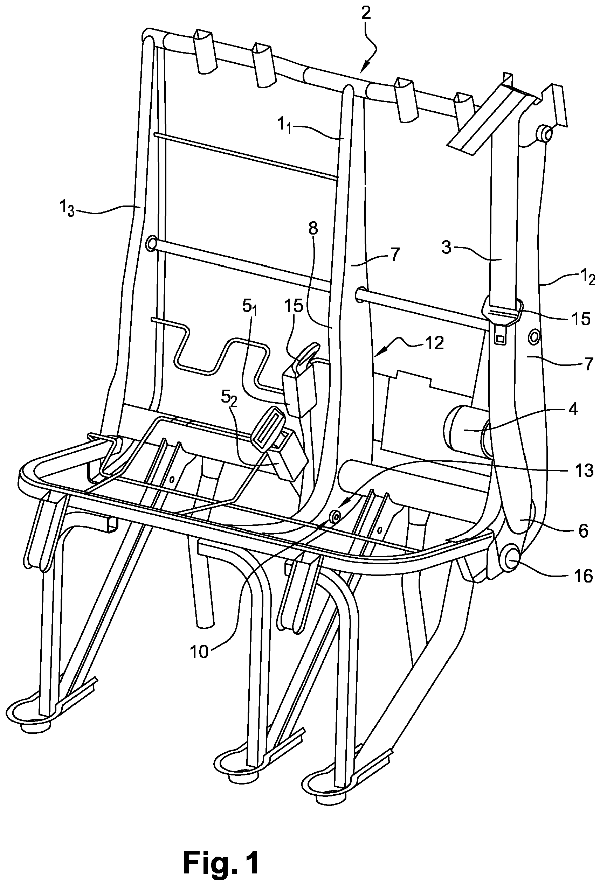

On a schématiquement représenté sur la figure 1 un exemple de réalisation d'une armature 2 destinée à faire partie d'un siège de type banquette associé à au moins deux ceintures de sécurité de type trois points.

Il est rappelé qu'une ceinture de sécurité de type trois points comprend une sangle 3 couplée à un enrouleur automatique 4 qui définit un point d'ancrage et à deux autres points d'ancrage, à savoir un brin de boucle 5ᵢ et une pièce d'ancrage (ou ferrure) 6. La sangle 3 passe au travers d'une ouverture définie dans un pêne (extractible) 15 coulissant et comportant une extrémité libre (ou âme), destinée à être introduite par un passager dans un mécanisme de verrouillage d'une boucle d'un brin de boucle 5ᵢ. La pièce d'ancrage (ou ferrure) 6 est solidarisée fixement à l'une des extrémités de la sangle 3.

Comme illustré sur la figure 1, l'armature 2 comprend trois dispositifs structurels 1ⱼ (j = 1 à 3) selon l'invention, installés dans des plans sensiblement parallèles entre eux en étant solidarisés les uns aux autres par d'autres éléments structurels, ici sensiblement transversaux.

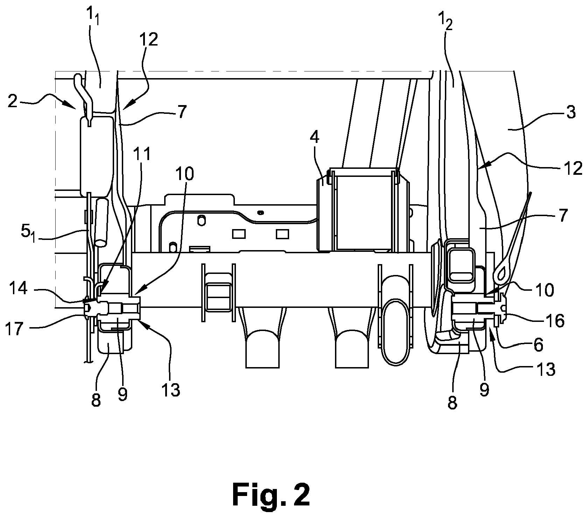

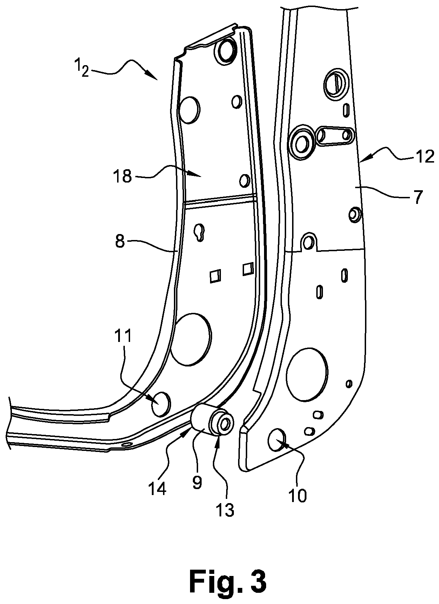

Comme cela apparaît mieux sur les figures 2 et 3, chaque dispositif structurel 1ⱼ comprend un flasque principal 7, un flasque de renfort 8 et une entretoise 9.

Le flasque principal 7 comporte une partie inférieure 12 qui est munie d'un premier trou 10. Il comprend une paroi réalisée dans un matériau résistant et rigide, comme par exemple un métal (éventuellement de l'acier). Cette paroi peut être obtenue par moulage ou par emboutissage et/ou usinage.

Le flasque de renfort 8 est muni d'un second trou 11 et est solidarisé fixement à la partie inférieure 12 du flasque principal 7. Cette solidarisation peut, par exemple, se faire par soudage. Mais elle pourrait également se faire par collage ou vissage, par exemple. Ce flasque de renfort 8 comprend une paroi réalisée dans un matériau résistant et rigide, comme par exemple un métal (éventuellement de l'acier (notamment en vue d'un possible soudage)). Cette paroi peut être obtenue par moulage ou par emboutissage et/ou usinage.

Une fois le flasque de renfort 8 solidarisé fixement au flasque principal 7, son premier trou 10 est placé sensiblement en regard du second trou 11 du flasque principal 7.

L'entretoise 9 comprend des première 13 et seconde 14 extrémités opposées. Elle est réalisée dans un matériau résistant et rigide, comme par exemple un métal (éventuellement de l'acier (notamment en vue d'un possible soudage)).

La première extrémité 13 traverse le premier trou 10 ou le second trou 11 et est munie d'un premier filetage interne. Ce dernier présente un premier diamètre et est propre à coopérer avec une tige filetée d'une première vis 16 adaptée à l'ancrage d'une pièce d'ancrage (ou ferrure) 6 d'une ceinture de sécurité, comme illustré sur les figures 1 et 2. La seconde extrémité 14 traverse le second trou 11 ou le premier trou 10 et est munie d'un second filetage interne. Ce dernier présente un second diamètre qui est supérieur au premier diamètre du premier filetage interne et est propre à coopérer avec une tige filetée d'une seconde vis 17 adaptée à l'ancrage d'au moins un brin de boucle 5ᵢ d'une ceinture de sécurité, comme illustré sur les figures 1 et 2.

L'entretoise 9 étant solidarisée aux flasque principal 7 et flasque de renfort 8, elle est solidement ancrée et donc peut à son tour assurer un ancrage solide pour une pièce d'ancrage 6 et/ou au moins un brin de boucle 5ᵢ. Les forces exercées par au moins un brin de boucle 5ᵢ ou une pièce d'ancrage 6 peuvent ainsi être supportées par l'ensemble structurel constitué par les flasque principal 7 et flasque de renfort 8, et non plus par le seul flasque principal 7 ou le seul flasque de renfort 8. Il y a donc désormais une reprise d'effort partagée. De plus, cela permet à l'entretoise 9 de renforcer la rigidité et la solidité de la partie inférieure de son dispositif structurel 1ⱼ. En outre, comme l'entretoise 9 dispose de deux filetages internes de diamètres différents dans ses première 13 et seconde 14 extrémités, son dispositif structurel 1ⱼ peut recevoir une pièce d'ancrage 6 et/ou au moins un brin de boucle 5ᵢ, et donc peut être aussi bien placé à un niveau intermédiaire d'une armature 2 (pour définir un dispositif structurel intermédiaire 1₁) qu'à une extrémité d'une armature 2 (pour définir un dispositif structurel d'extrémité 1₂).

Il est ici rappelé que les réglementations relatives aux chocs, en vigueur dans de nombreux pays, imposent généralement que la pièce d'ancrage 6 soit solidarisée à son point d'ancrage via une première vis 16 présentant un premier diamètre d1 et que le brin de boucle 5ᵢ soit solidarisé à son point d'ancrage via une seconde vis 17 présentant un second diamètre d2 supérieur au premier diamètre d1 (soit d2 > d1). Par exemple, le premier diamètre d1 peut être égal à 10 mm et le second diamètre d2 peut être égal à 12 mm.

Dans l'exemple non limitatif illustré sur les figures 1 à 3, les premier 1₁ et deuxième 1₂ dispositifs structurels sont identiques. Le premier dispositif structurel 1₁ (ou dispositif structurel intermédiaire) comprend une entretoise 9 ayant une première extrémité 13 non utilisée et une seconde extrémité 14 servant de point d'ancrage via une même seconde vis 17 à deux brins de boucle 5₁ et 5₂ (i = 1 ou 2) appartenant à deux ceintures de sécurité voisines. Le deuxième dispositif structurel 1₂ (ou dispositif structurel d'extrémité) comprend une entretoise 9 ayant une première extrémité 13, servant de point d'ancrage via une première vis 16 à une pièce d'ancrage 6 appartenant à l'une des deux ceintures de sécurité précitées, et une seconde extrémité 14 non utilisée.

On notera que dans l'exemple illustré non limitativement sur les figures 1 et 2, l'enrouleur automatique est solidarisé à une traverse de l'armature 2 qui est solidarisée fixement aux premier 1₁ et deuxième 1₂ dispositifs structurels.

Les premier 10 et second 11 trous présentant des centres alignés sur une même droite pour accueillir les première 13 et seconde 14 extrémités, il n'y a donc pas de décalage des points d'ancrage des brin de boucle 5ᵢ et pièce d'ancrage 6 d'une même ceinture de sécurité, ce qui évite d'engendrer une rupture d'inertie dans une zone qui est très sollicitée.

On notera que dans l'exemple non limitatif illustré sur la figure 1 le troisième dispositif structurel 1₃ (qui est un autre dispositif structurel d'extrémité) est différent des premier 1₁ et deuxième 1₂ dispositifs structurels. En fait, sur la figure 1, le troisième dispositif structurel 1₃ a son flasque principal 7 à gauche et son flasque de renfort 8 à droite, tandis que les premier 1₁ et deuxième 1₂ dispositifs structurels ont leur flasque de renfort 8 à gauche et leur flasque principal 7 à droite. Mais dans une variante de réalisation, les premier 1₁ et troisième 1₃ dispositifs structurels pourraient être identiques, et le deuxième dispositif structurel 1₂ pourrait être différent des premier 1₁ et troisième 1₃ dispositifs structurels.

Le troisième dispositif structurel 1₃ est sensiblement symétrique aux premier 1₁ et deuxième 1₂ dispositifs structurels.

On notera également que la première extrémité 13 de l'entretoise 9 peut être solidarisée fixement soit au flasque principal 7, soit au flasque de renfort 8. Cette solidarisation peut, par exemple, se faire par soudage. Mais elle pourrait également se faire par collage. En variante ou en complément, la seconde extrémité 14 de l'entretoise 9 peut être solidarisée fixement soit au flasque de renfort 8, soit au flasque principal 7. Cette solidarisation peut, par exemple, se faire par soudage. Mais elle pourrait également se faire par collage. A titre d'exemple, on peut commencer par souder une partie de la première extrémité 13 au flasque principal 7, puis on peut souder le flasque de renfort 8 au flasque principal 7, en soudant éventuellement la seconde extrémité 14 au flasque de renfort 8 (bien que cela ne soit pas obligatoire).

Comme illustré non limitativement sur les figures 2 et 3, la première extrémité 13 de l'entretoise 9 peut avantageusement comprendre un premier épaulement qui définit une face d'appui sensiblement plaquée contre la face interne 18 soit du flasque principal 7, soit du flasque de renfort 8. Ce premier épaulement résulte d'une réduction locale du diamètre externe de la première extrémité 13. La partie de cette dernière (13) qui présente un plus petit diamètre extérieur peut ainsi être avantageusement introduite dans le premier trou 10, ce qui renforce encore l'ancrage d'une pièce d'ancrage 6.

De même, et comme illustré non limitativement sur les figures 2 et 3, la seconde extrémité 14 de l'entretoise 9 peut avantageusement comprendre un second épaulement qui définit une face d'appui sensiblement plaquée contre la face interne 18 soit du flasque de renfort 8, soit du flasque principal 7. Ce second épaulement résulte d'une réduction locale du diamètre externe de la seconde extrémité 14. La partie de cette dernière (14) qui présente un plus petit diamètre extérieur peut ainsi être avantageusement introduite dans le second trou 11, ce qui renforce encore l'ancrage d'un brin de boucle 5ᵢ.

On notera également que la partie d'une première 13 ou seconde 14 extrémité qui présente un plus petit diamètre extérieur n'est a priori pas destinée à recevoir une pièce d'ancrage 6 ou au moins un brin de boucle 5ᵢ. En effet, comme illustré sur la figure 2, il est préférable que la première vis 16 comporte une tête venant s'appuyer contre la partie terminale de la première extrémité 13 et disposant, entre une collerette et la tige filetée, d'une partie cylindrique de diamètre extérieur strictement supérieur au premier diamètre d1 du premier filetage interne et destinée à recevoir une pièce d'ancrage 6. De même, il est préférable que la seconde vis 17 comporte une tête venant s'appuyer contre la partie terminale de la seconde extrémité 14 et disposant, entre une collerette et la tige filetée, d'une partie cylindrique de diamètre extérieur strictement supérieur au second diamètre d2 du second filetage interne et destinée à recevoir au moins un brin de boucle 5ᵢ.

L'invention offre plusieurs avantages, parmi lesquels :
- elle permet d'utiliser un même dispositif structurel pour fixer soit deux brins de boucle, soit une pièce d'ancrage (ou ferrure), et ainsi d'ancrer les brins de boucle et pièce d'ancrage dans des zones alignées suivant un même axe,
- elle permet de ne pas dé-standardiser la pièce d'ancrage (ou ferrure) du retour de sangle qui est conçue pour être fixée avec une vis épaulée d'un premier diamètre,
- elle permet une meilleure répartition des efforts à la fois sur le flasque principal et sur le flasque de renfort (ce qui peut notamment permettre une optimisation des épaisseurs de ces flasques).

## Revendications

1. Dispositif structurel (1ⱼ) pour une armature (2) d'un siège de type banquette, comprenant i) un flasque principal (7) comportant une partie inférieure (12) munie d'un premier trou (10), ii) un flasque de renfort (8) muni d'un second trou (11) et solidarisé à ladite partie inférieure (12), et **caractérisé en ce qu'**il comprend iii) une entretoise (9) comprenant une première extrémité (13) traversant ledit premier (10) ou second (11) trou et munie d'un premier filetage interne, présentant un premier diamètre et propre à coopérer avec une tige filetée d'une première vis (16) adaptée à l'ancrage d'une pièce d'ancrage (6) d'une ceinture de sécurité, et une seconde extrémité (14) traversant ledit second (11) ou premier (10) trou et munie d'un second filetage interne, présentant un second diamètre supérieur audit premier diamètre et propre à coopérer avec une tige filetée d'une seconde vis (17) adaptée à l'ancrage d'au moins un brin de boucle (5ᵢ) d'une ceinture de sécurité.

2. Dispositif selon la revendication 1, **caractérisé en ce que** ladite première extrémité (13) de l'entretoise (9) est solidarisée fixement soit audit flasque principal (7), soit audit flasque de renfort (8).

3. Dispositif selon l'une des revendications 1 et 2, **caractérisé en ce que** ladite première extrémité (13) de l'entretoise (9) comprend un premier épaulement définissant une face d'appui sensiblement plaquée contre une face interne soit dudit flasque principal (7), soit dudit flasque de renfort (8).

4. Dispositif selon l'une des revendications 1 à 3, **caractérisé en ce que** ladite seconde extrémité (14) de l'entretoise (9) est solidarisée fixement soit audit flasque de renfort (8), soit audit flasque principal (7).

5. Dispositif selon l'une des revendications 1 à 4, **caractérisé en ce que** ladite seconde extrémité (14) de l'entretoise (9) comprend un second épaulement définissant une face d'appui sensiblement plaquée contre une face interne soit dudit flasque de renfort (8), soit dudit flasque principal (7).

6. Armature (2) pour un siège de type banquette, **caractérisée en ce qu'**elle comprend i) trois dispositifs structurels (1ⱼ) selon l'une des revendications précédentes, un premier (1₁) étant intercalé entre des deuxième (1₂) et troisième (1₃), ii) deux pièces d'ancrage (6) de deux ceintures de sécurité solidarisées respectivement auxdits deuxième (1₂) et troisième (1₃) dispositifs structurels via deux premières vis (16), et iii) deux brins de boucle (5₁, 5₂) desdites deux ceintures de sécurité solidarisés audit premier dispositif structurel (1₁) via une seconde vis (17).

7. Siège de type banquette, **caractérisé en ce qu'**il comprend une armature (2) selon la revendication 6 et deux ceintures de sécurité.

8. Véhicule, **caractérisé en ce qu'**il comprend au moins un siège de type banquette selon la revendication 7.

9. Véhicule selon la revendication 8, **caractérisé en ce qu'**il est de type automobile.

10. Véhicule selon la revendication 9, **caractérisé en ce qu'**il est de type utilitaire ou de type transport en commun.

## Patentansprüche

1. Strukturelle Vorrichtung (1ⱼ) für eine Einlage (2) eines Sitzes vom Typ Bank, die i) einen Hauptflansch (7) umfasst, der einen unteren Teil (12), der mit einer ersten Bohrung (10) versehen ist, umfasst, ii) einen Verstärkungsflansch (8), der mit einer zweiten Bohrung (11) versehen und fest mit dem unteren Teil (12) verbunden ist, und **dadurch gekennzeichnet, dass** sie iii) einen Rahmen (9) umfasst, der ein erstes Ende (13) umfasst, das die erste (10) oder zweite Bohrung (11) durchquert und mit einem ersten Innengewinde versehen ist, das einen ersten Durchmesser aufweist und geeignet ist, um mit einem Gewindestift einer ersten Schraube (16), die zum Verankern eines Verankerungsteils (6) eines Sicherheitsgurts angepasst ist, zusammenzuwirken, und ein zweites Ende (14), das die zweite (11) oder erste Bohrung (10) durchquert und mit einem zweiten Innengewinde versehen ist, das einen zweiten Durchmesser, der größer ist als der erste Durchmesser aufweist, und geeignet ist, um mit einem Gewindestift einer zweiten Schraube (17), die zum Verankern mindestens eines Schnallenstrangs (5ᵢ) eines Sicherheitsgurts geeignet ist, zusammenzuwirken.

2. Vorrichtung nach Anspruch 1, **dadurch gekennzeichnet, dass** das erste Ende (13) des Rahmens (9) stationär entweder mit dem Hauptflansch (7) oder mit dem Verstärkungsflansch (8) fest verbunden ist.

3. Vorrichtung nach einem der Ansprüche 1 und 2, **dadurch gekennzeichnet, dass** das erste Ende (13) des Rahmens (9) eine erste Schulter umfasst, die eine Auflagefläche definiert, die im Wesentlichen gegen eine innere Fläche entweder des Hauptflanschs (7) oder des Verstärkungsflanschs (8) angedrückt ist.

4. Vorrichtung nach einem der Ansprüche 1 bis 3, **dadurch gekennzeichnet, dass** das zweite Ende (14) des Rahmens (9) stationär entweder mit dem Verstärkungsflansch (8) oder mit dem Hauptflansch (7) fest verbunden ist.

5. Vorrichtung nach einem der Ansprüche 1 bis 4, **dadurch gekennzeichnet, dass** das zweite Ende (14) des Rahmens (9) eine zweite Schulter umfasst, die eine Auflagefläche definiert, die im Wesentlichen gegen eine innere Fläche entweder des Verstärkungsflanschs (8) oder des Hauptflanschs (7) gedrückt ist.

6. Einlage (2) für einen Sitz vom Typ Bank, **dadurch gekennzeichnet, dass** sie i) drei strukturelle Vorrichtungen (1ⱼ) nach einem der vorstehenden Ansprüche umfasst, wobei eine erste (1₁) zwischen einem zweiten (1₂) und dritten (1₃) von zwei Verankerungsteilen (6) von zwei Sicherheitsgurten eingefügt ist, die jeweils mit der zweiten (1₂) und dritten (1₃) strukturellen Vorrichtung über zwei erste Schrauben (16) fest verbunden sind, und iii) zwei Schnallenstränge (5₁, 5₂) der zwei Sicherheitsgurte mit der ersten strukturellen Vorrichtung (1₁) über eine zweite Schraube (17) fest verbunden sind.

7. Sitz vom Banktyp, **dadurch gekennzeichnet, dass** er eine Einlage (2) nach Anspruch 6 und zwei Sicherheitsgurte umfasst.

8. Fahrzeug, **dadurch gekennzeichnet, dass** es mindestens einen Sitz vom Banktyp nach Anspruch 7 umfasst.

9. Fahrzeug nach Anspruch 8, **dadurch gekennzeichnet, dass** es vom Automobiltyp ist.

10. Fahrzeug nach Anspruch 9, **dadurch gekennzeichnet, dass** es vom Typ Nutzfahrzeug oder öffentliches Verkehrsmittel ist.

## Claims

1. A structural device (1ⱼ) for a framework (2) of a seat of the bench type, including i) a main flange (7) comprising a lower part (12) provided with a first hole (10), ii) a reinforcement flange (8) provided with a second hole (11) and secured to said lower part (12), and **characterized in that** it includes (iii) a strut (9) including a first end (13) passing through said first (10) or second (11) hole and provided with a first internal thread, having a first diameter and appropriate to cooperate with a threaded shank of a first screw (16) suited for the anchoring of an anchoring part (6) of a safety belt, and a second end (14) passing through said second (11) or first (10) hole and provided with a second internal thread, having a second diameter greater than said first diameter and appropriate to cooperate with a threaded shank of a second screw (17) suited for the anchoring of at least one belt buckle (5ᵢ) of a safety belt.

2. The device according to Claim 1, **characterized in that** said first end (13) of the strut (9) is fixedly secured either to said main flange (7) or to said reinforcement flange (8).

3. The device according to one of Claims 1 and 2, **characterized in that** said first end (13) of the strut (9) includes a first shoulder defining a support face which is substantially pressed against an internal face either of said main flange (7) or of said reinforcement flange (8).

4. The device according to one of Claims 1 to 3, **characterized in that** said second end (14) of the strut (9) is fixedly secured either to said reinforcement flange (8) or to said main flange (7).

5. The device according to one of Claims 1 to 4, **characterized in that** said second end (14) of the strut (9) includes a second shoulder defining a support face which is substantially pressed against an internal face either of said reinforcement flange (8), or of said main flange (7).

6. A framework (2) for a seat of the bench type, **characterized in that** it includes i) three structural devices (1ⱼ) according to one of the preceding claims, a first (1₁) being intercalated between second (1₂) and third (1₃), ii) two anchoring parts (6) of two safety belts secured respectively to said second (1₂) and third (1₃) structural devices via two first screws (16), and iii) two belt buckles (5₁, 5₂) of said two safety belts secured to said first structural device (1₁) via a second screw (17).

7. A seat of the bench type, **characterized in that** it includes a framework (2) according to Claim 6 and two safety belts.

8. A vehicle, **characterized in that** it includes at least one seat of the bench type according to Claim 7.

9. The vehicle according to Claim 8, **characterized in that** it is of the automobile type.

10. The vehicle according to Claim 9, **characterized in that** it is of the utility type or of the public transport type.
